# EUROPEAN PATENT APPLICATION

(11) **EP 1 185 069 A2**
(43) Date of publication of application: **06.03.2002**
(21) Application number: 01306840.8
(22) Date of filing: 10.08.2001
(51) Int. Cl.: H04M 7/00

(54) **Method and system for providing anonymity in an IP telephony network**

(30) Priority: 28.08.2000 US 649426
(71) Applicant: Nortel Networks Limited, St. Laurent, Quebec H4S 2A9 (CA)
(72) Inventor: Christie, Samuel H IV, Cary, North Carolina 27513 (US)
(74) Representative: Mackenzie, Andrew Bryan

(57) **Abstract**

Means for providing anonymity in a Voice-over IP (VoIP) telephony network for calls established between a calling endpoint **120** and a called endpoint **130**. The calling and called endpoints **120**, **130** have respective IP addresses and can be under the control of a single IP call server **110** or separate IP call servers **110, 310.** An IP address is obtained from a network address translator **150** that is operatively connected to the IP call server **110**. The IP call server **110** then substitutes the IP address of the calling endpoint **120** with the IP address obtained from the network address translator **150** in all call signaling messages intended for the called endpoint **130**. Conversely, the IP call server **110** substitutes the IP address obtained from the network translator **150** with the IP address of the calling endpoint **120** in all call signaling messages intended for the calling endpoint **120**. The end result is the setup and establishment of a VoIP call between the endpoints **120, 130** in which the actual IP address of each endpoint is unknown to the other.

## Description

### FIELD OF THE INVENTION

The present invention relates generally providing additional anonymity to endpoints in a Voice-over IP (VoIP) telephony network.

### BACKGROUND OF THE INVENTION

There are mechanisms for providing anonymity when placing telephone calls over circuit switched telephone networks. Features like calling number delivery blocking prevent the display of the calling number and other directory information. Similar features exist for packet switched telephony networks like Voice-over IP (VoIP). The call signaling mechanisms of VoIP telephony networks can also provide calling number delivery blocking features. However, in a VoIP telephony network there are two distinct links used in making a call. One link is a call signaling path which is used by network infrastructure equipment to set up and establish a call between the endpoints. The other link is a bearer path which carries the VoIP data packets that constitute the actual conversation between the endpoints.

The call signaling path can prevent endpoint identification information from being provided to the other endpoint. However, using Internet Protocol (IP) transport techniques for the media stream (voice data packets) reveals the IP address of the nodes being used for the communication session. Thus, some endpoint identification information can be obtained by knowing the IP addresses of the nodes involved in the communication session.

What is needed is a means for shielding endpoint identification information in a packet data telephony network such as Voice-over IP (VoIP) that does not require significant network infrastructure changes.

### SUMMARY OF THE INVENTION

Strategic use of Network Address Translation (NAT) provides a means for shielding the true IP addresses of the nodes involved in the communication session. Use of a NAT box is controlled by IP call servers in a VoIP network in order to support signaling of the correct addresses to establish a connection between the endpoints.

Implementations that call for a NAT box to understand each protocol (and there can be several) used to signal the creation of a communication session and to further understand the implied desired behavior require a high degree of added intelligence to the network infrastructure. Widespread addition of network infrastructure intelligence dramatically slows down the rate of service deployment since the entire network must be upgraded in order to support a new service protocol before it can be rolled out.

The present invention uses a control protocol to signal the need for Network Address Translation (NAT) functionality and directs a media (voice packet data) stream to the appropriate translated node address. Either a proactive Common Open Policy Service (COPS) implementation or media gateway control protocol implementations can be used to deliver the control protocol messages.

In accordance with a first embodiment of the invention is a method of providing anonymity in a Voice-over IP (VoIP) telephony network for calls established between a calling endpoint and a called endpoint. The calling and called endpoints have respective IP addresses and are under the control of a single IP call server. An IP address is obtained from a network address translator that is logically connected to the IP call server via an IP network. The IP call server then substitutes the IP address of the calling endpoint with the first IP address obtained from the network address translator in all call signaling messages intended for the called endpoint. Conversely, the IP call server substitutes the second IP address obtained from the network translator with the IP address of the calling endpoint in all call signaling messages intended for the calling endpoint.

In accordance with a second embodiment of the invention is a method of providing anonymity in a Voice-over IP (VoIP) telephony network for calls established between a calling endpoint and a called endpoint. The calling and called endpoints have respective IP addresses but are under the control separate IP call servers. An IP address is obtained from an associated network address translator by the call server serving the calling endpoint (call server 1). Call server 1 substitutes the IP address of the calling endpoint with the IP address obtained from its associated network address translator in all call signaling messages intended for the called endpoint. All call signaling messages are routed through a second IP call server serving the called endpoint (call server 2). Call server 1 also substitutes the IP address obtained from its associated network address translator with the IP address of the calling endpoint in all call signaling messages intended for the calling endpoint.

Call server 2 obtains an IP address from an associated network address translator and substitutes the IP address of the called endpoint with the IP address obtained from its associated network address translator in all call signaling messages intended for the calling endpoint and routed through call server 1. Call server 2 also substitutes the IP address obtained from its associated network address translator with the IP address of the called endpoint in all call signaling messages intended for the called endpoint. If there are multiple (two or more) call servers involved in the call, not all of them need perform network address translation.

The end result is the setup and establishment of a VoIP call between the endpoints in which the actual IP address of each endpoint is unknown to the other. Another benefit realized is address conservation in, for example, private (enterprise) networks.

Other aspects and features of the present invention will become apparent to those ordinarily skilled in the art upon review of the following description of specific embodiments of the invention in conjunction with the accompanying figures.

### BRIEF DESCRIPTION OF THE FIGURES

**FIGURE 1** illustrates a diagram in which a NAT box under control of a call server is used to provide anonymity between two endpoints.
**FIGURE 2** is a message diagram describing the messaging used to anonymously establish a VoIP call between endpoints in which a single NAT box and call server are utilized.
**FIGURE 3** illustrates a diagram in which two NAT boxes under control of separate call servers are used to provide anonymity between two endpoints.
**FIGURE 4** is a message diagram describing the messaging used to anonymously establish a VoIP call between endpoints in which more than one NAT box and call server are utilized.

### DETAILED DISCLOSURE OF THE INVENTION

To understand how the present invention works a brief description of VoIP telephony as compared to circuit switched telephony is useful. Voice-over Internet Protocol (VoIP) telephony is a means of providing telecommunication between endpoints over packet switched (as opposed to circuit switched) networks. Circuit switched networks like the Public Switching Telephone Network (PSTN) are what most people think of when they think of telecommunications. These are the networks used when placing calls over standard telephone sets. Packet switched networks are primarily data networks like the Internet.

Circuit switching provides a connection between endpoints (telephone sets) meaning voice signals are transferred from one endpoint to the other over a dedicated circuit route established by the circuit switched network infrastructure equipment. This is done for every call on a per call basis. Circuit switching networks identify endpoints according to their directory numbers. The directory numbers of the endpoints determine whether a call is local or long distance. This has implications on the amount of network infrastructure involved in establishing the call. For instance, long distance calls are routed among more than one central office while local calls can often be handled within a single central office.

Packet switching, by contrast, does not establish connections between endpoints within the network infrastructure. Rather, voice signals are packetized into voice data packets and routed in streams over a packet data network such as the Internet. During routing over the packet data network, voice data packets may be commingled with other data packets or travel diverse paths across the network. Thus, each voice data packet contains a unique identifier indicating its destination since it is not traveling over a pre-established connection between endpoints. The unique identifier is the IP address of the destination. An IP address is a numeric string given to fixed network entities. There are a variety of network entities that have fixed network addresses including routers, servers, gateways, etc.

Practically, VoIP phone users initiate calls among themselves or to wireless or to circuit switched endpoints the same way that circuit switched phone users do, according to directory number. Circuit switched endpoints can communicate with packet switched endpoints and vice versa. The requisite conversions between the dissimilar networks are handled by network interface infrastructure equipment. The interface equipment converts circuit switched signals to voice data packets and data packets to circuit switched signals while also reconciling the different endpoint call signaling and identification schemes. Since VoIP phone users use directory numbers the directory numbers must be associated with IP addresses in order to establish a call.

In circuit switched telephony networks there are well known privacy calling features available to subscribers that provide anonymity. One such feature is calling number delivery blocking. These features prevent the destination endpoint from knowing the directory number and other associated information of the originating endpoint. This information is readily available in the call signaling mechanisms of circuit switched systems but can be suppressed upon request.

Some of the same privacy features exist for VoIP networks to a certain extent. Call signaling mechanisms can prevent IP endpoints from receiving directory information. However, call signaling mechanisms do not prevent the IP addresses of the nodes used in the communication session (phone call) from being discerned. This is a situation unique to VoIP networks that does not exist in circuit switched telephony networks.

As stated earlier, there are two distinct data links used for making a call in a Voice-over IP (VoIP) telephony network. There is the call signaling path and the bearer path. The call signaling path can prevent endpoint identification information from being provided to the other endpoint but does not necessarily shield the IP address of the nodes being used for the communication session. Thus, some endpoint identification information can be obtained by knowing the IP address(es) of the nodes involved in the communication session. The present invention uses Network Address Translation (NAT) functionality to provide an extra measure of anonymity to endpoints.

Network Address Translation (NAT) essentially works as follows. Upon receipt of a data packet at a NAT box, the NAT box substitutes the originating endpoint IP node address with a different IP address. The destination endpoint only sees the substituted IP address and has no real knowledge of the originating endpoint IP node address. Thus, the identity of the originating endpoint's IP node is shielded from the destination endpoint.

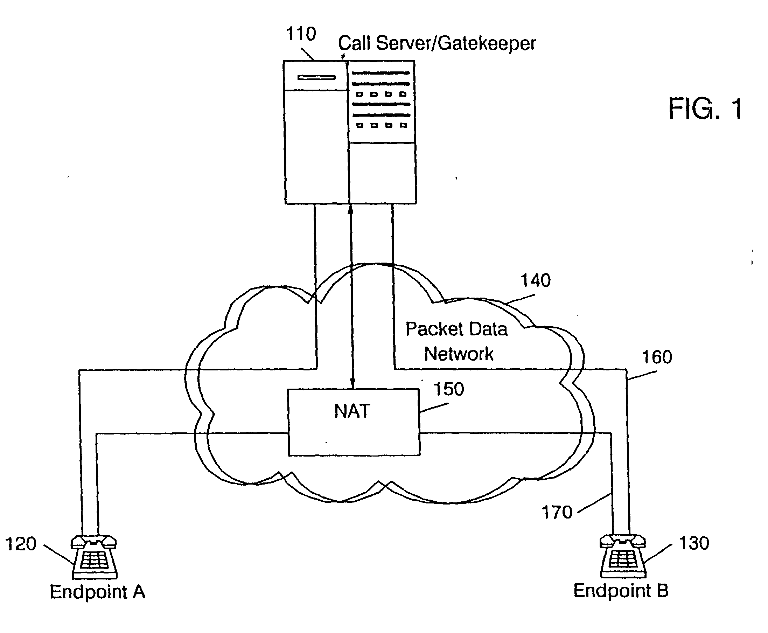

**FIGURE 1** illustrates a diagram in which a NAT box under control of a call server is used to provide additional anonymity between endpoints. Shown is a simplified view of a packet data telephony network. A single call server **110** is used to provide call setup functionality between a pair of endpoints **120, 130** labeled Endpoint A and Endpoint B, respectively. The endpoints are voice terminals that give users telecommunication ability. Endpoints **120, 130** communicate over a packet data network **140** such as the Internet, for instance. Also shown is a Network Address Translation (NAT) box **150** connected to call server **110**. NAT box **150** is used strategically to conceal the IP addresses of the nodes (endpoints) involved in the communication session.

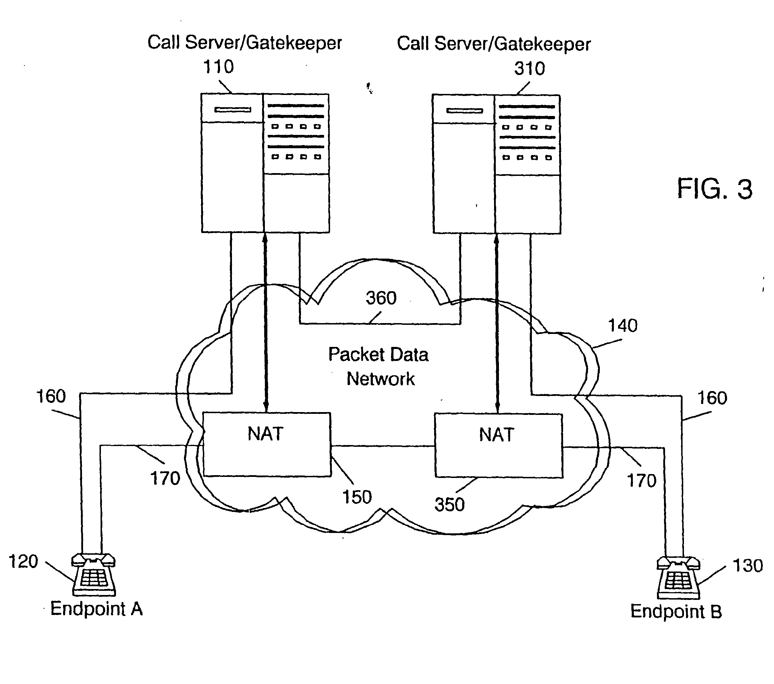

Call server **110** is a VoIP network entity having a fixed IP address. It manages call setup among its associated endpoints via a call signaling path **160**. A full scale VoIP network is typically comprised of multiple call servers each managing multiple endpoints. In order for endpoints under the control of different call servers to communicate with one another, their respective call servers must be able to communicate with one another. This is described further in **FIGURE 3.**

Call signaling path **160** is used to exchange information in the form of messages between call server **110** and its associated endpoints **120, 130**. Moreover, call servers utilize call signaling paths in order to connect them with other call servers (see, **FIGURE 3**). The messages exchanged are used to setup, establish, and tear down calls between endpoints. Establishing a call between endpoints means establishing separate streams between the endpoints known as a bearer path **170**. Bearer path **170** is used to convey the actual voice data packets between endpoints **120**, **130**.

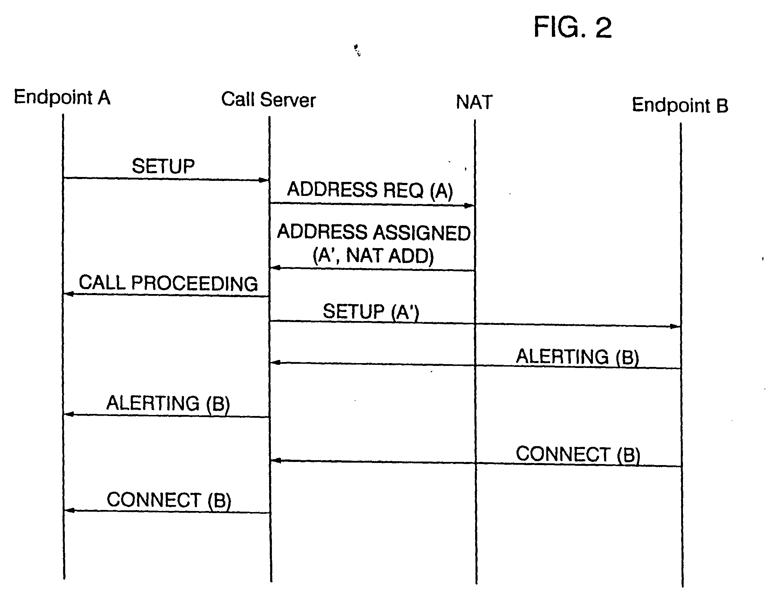

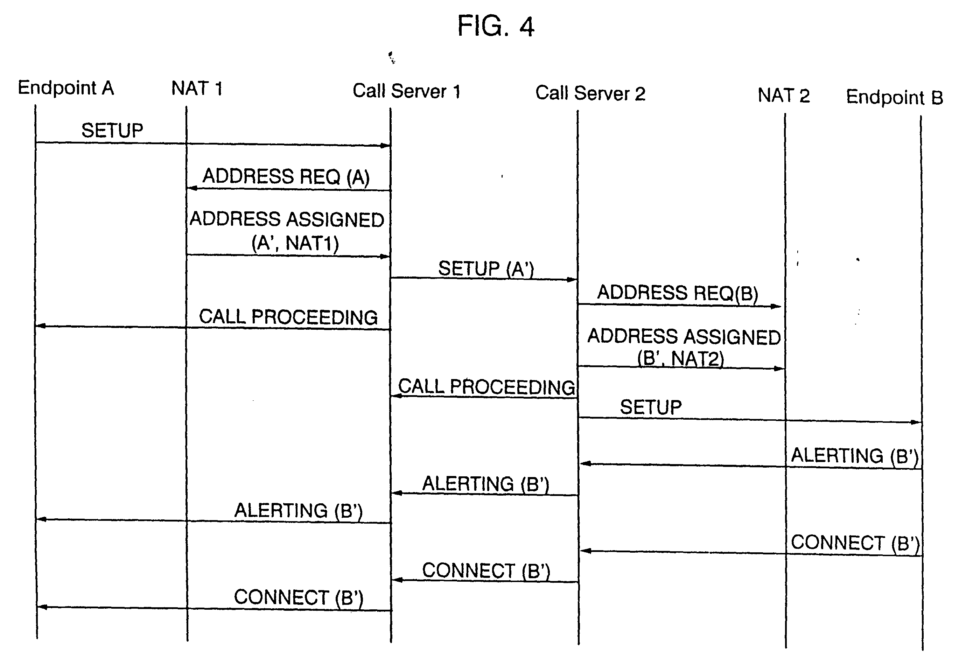

The messaging shown in **FIGURES 2** and **4** is based upon the H.323 protocol. The messaging names used, however, are more functional in nature in order to describe how the present invention works. These messages have equivalents in other protocols and these equivalents are readily determinable by those of ordinary skill in the art. The H.323 protocol is used for illustrative purposes only and is not intended to restrict the present invention in any way. The H.323 protocol is an ITU standard defining a set of call control, channel setup, and codec specifications for transmitting real-time voice and video over packet data networks. Corresponding the messages illustrated in **FIGURES 2** and **4** to other protocols is a relatively simple task to those of ordinary skill in the art.

Other protocols including, but not limited to, BICC and SIP, may be used without departing from the spirit or scope of the present invention. In fact, it is the ability to use other protocols in implementing the present invention that makes the present invention particularly useful for providing additional anonymity to VoIP telephony users.

**FIGURE 2** is a message diagram describing the messaging used to anonymously establish a VoIP call between the endpoints **120,130** shown in **FIGURE 1**. Endpoint A sends a *Setup* message to its call server. Before attempting to set up the call with Endpoint B, the call server sends an *Address Request* message to a Network Address Translation (NAT) box. The NAT box returns an *Address Assigned* message to the call server. The *Address Assigned* message contains both a temporary address (A') and a NAT address. This step is performed in order to substitute the IP address of Endpoint A with the temporary IP address (A') obtained from the NAT box. Now when call server **110** communicates with Endpoint B on behalf of Endpoint A it uses the A' IP address it obtained from the NAT box.

At this point the call server sends a *Call Proceeding* message back to Endpoint A while also sending a *Setup* message to Endpoint B containing the A' IP address. Endpoint B returns an *Alerting* message to the call server which passes the *Alerting* message to Endpoint A. It is the responsibility of the call server to associate the NAT supplied IP address for Endpoint A with the actual IP address of Endpoint A.

Endpoint B then sends a *Connect* message to the call server which interprets the NAT supplied IP address and forwards the *Connect* message to Endpoint A completing the establishment of the call. A conversation can now take place between Endpoints A and B over the bearer path via the NAT with the NAT substituting the A' and A addresses.

The mechanism for delivering the chosen control protocol messages between the call server(s) and NAT box(es) can be via an extension to the Common Open Policy Services (COPS) protocol or a media gateway control protocol implementation.

**FIGURE 3** illustrates a diagram in which two NAT boxes under control of separate call servers are used to provide anonymity between two endpoints. **FIGURE 3** deals with the scenario in which a call is spread over more than one call server. **FIGURE 3** differs from **FIGURE 1** in that an additional call server **310** and NAT box **350** are shown with an additional call signaling path **360** connecting call servers **110, 310**. The present invention can be similarly extended over a plurality of call servers in a VoIP network.

**FIGURE 4** represents a message diagram describing the messaging used to anonymously establish a VoIP call between the endpoints shown in **FIGURE 3**.

Endpoint A sends a *Setup* message to Call Server 1. Before attempting to set up the call with Endpoint B, Call Server 1 sends an *Address Request* message to Network Address Translation (NAT) box 1. NAT box 1 returns an *Address Assigned* message to the Call Server 1. The *Address Assigned* message contains a both a temporary address (A') and a NAT address (NAT1). This step is performed in order to substitute Endpoint A's IP address with the temporary IP address (A') obtained from the NAT box 1. Now when Call Server 1 communicates with Call Server 2 on behalf of Endpoint A it uses the A' IP address it obtained from NAT box 1.

At this point Call Server 1 forwards the *Setup* message to Call Server 2 using the A' IP address for Endpoint A. Call Server 2 determines from call signaling information contained in the *Setup* message that the destination of the *Setup* message is Endpoint B. To protect Endpoint B's anonymity Call Server 2 sends an *Address Request* message to Network Address Translation (NAT) box 2. NAT box 2 returns an *Address Assigned* message to Call Server 2. The *Address Assigned* message contains a both a temporary address (B') and a NAT address (NAT2). This step is performed in order to substitute Endpoint B's IP address with the temporary IP address (B') obtained from the NAT box 1. Now when Call Server 2 communicates with Call Server 1 on behalf of Endpoint B it uses the B' IP address it obtained from NAT box 2.

Call Server 2 then sends a *Call Proceeding* message back to Call Server 1. Call Server 1, in turn, sends the *Call Proceeding* message to Endpoint A. At the same time, Call Server 2 sends a *Setup* message to Endpoint B. Endpoint B returns an *Alerting* message to Call Server 2 which passes the *Alerting* message to Call Server 1 and on to Endpoint A. Endpoint B then sends a *Connect* message to the Call Server 2 which passes the *Connect* message to Call Server 1 and on to Endpoint A completing the establishment of the call.

Thus, messages exchanged between the call servers use NAT supplied anonymous IP addresses for their respective endpoints. Call Server 2 does not know the true IP address of Endpoint A and Call Server 1 does not know the true IP address of Endpoint B. The call servers are responsible for reconciling the NAT supplied IP addresses of the endpoints with the actual IP addresses of the endpoints in order to route the messages to the proper destinations.

For implementing the present invention using H.248, the call server generates an additional connection request or a modify connection request to the NAT, treating the NAT as a packet-to-packet gateway. In such an implementation, the NAT controller (call server) controls logical NAT resources as endpoints and maps them to physical resources such as NAT, IP address, and port number.

The preceding description references call server(s) **110, 310**. A call server, for purposes of the present invention, is any device that exhibits call signaling control over one or more endpoints. Devices including, but not limited to, media gateway controllers and gatekeepers, can be call servers. It is also anticipated that call server functionality can be implemented within an endpoint itself. In addition, the present invention is applicable to any packet data telephony network and should not be construed as limited to an IP or VoIP packet data network implementation. Reference to IP addresses is for illustration purposes only. One of ordinary skill in the art can apply the concepts of the present invention to other packet data networks.

It is to be understood that the present invention illustrated herein is readily implementable by those of ordinary skill in the art as a computer program product having a medium with a computer program embodied thereon. The computer program product is capable of being loaded and executed on the appropriate computer processing device(s) in order to carry out the method or process steps described. Appropriate computer program code in combination with hardware implements many of the elements of the present invention. This computer code is often stored on storage media. This media can be a diskette, hard disk, CD-ROM, optical storage media, or tape. The media can also be a memory storage device or collection of memory storage devices such as read-only memory (ROM) or random access memory (RAM). Additionally, the computer program code can be transferred to the appropriate hardware over some type of data network.

The present invention has been described, in part, with reference to flowchart illustration(s) or message diagram(s). It will be understood that each block of the flowchart illustrations or message diagram, and combinations of blocks in the flowchart illustrations or message diagrams, can be implemented by computer program instructions.

These computer program instructions may be loaded onto a general purpose computer, special purpose computer, or other programmable data processing apparatus to produce a machine, such that the instructions which execute on the computer or other programmable data processing apparatus create means for implementing the functions specified in the flowchart block(s) or message diagram(s).

These computer program instructions may also be stored in a computer-readable memory that can_direct a computer or other programmable data processing apparatus to function in a particular manner, such that the instructions stored in the computer-readable memory produce an article of manufacture including instruction means which implement the function specified in the flowchart block(s). The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions specified in the flowchart block(s) or message diagram(s).

Accordingly, block(s) of flowchart illustrations or message diagram(s) support combinations of means for performing the specified functions, combinations of steps for performing the specified functions and program instruction means for performing the specified functions. It will also be understood that each block of flowchart illustrations or message diagram, and combinations of blocks in flowchart illustrations, or message diagrams can be implemented by special purpose hardware-based computer systems that perform the specified functions or steps, or combinations of special purpose hardware and computer instructions.

In the following claims, any means-plus-function clauses are intended to cover the structures described herein as performing the recited function and not only structural equivalents but also equivalent structures. Therefore, it is to be understood that the foregoing is illustrative of the present invention and is not to be construed as limited to the specific embodiments disclosed, and that modifications to the disclosed embodiments, as well as other embodiments, are intended to be included within the scope of the appended claims. The invention is defined by the following claims, with equivalents of the claims to be included therein.

## Claims

1. A method of providing endpoint anonymity in a packet data telephony network comprising:
receiving a temporary packet data network address from a network address translator; and
substituting the packet data network address of a calling endpoint with the temporary packet data network address obtained from said network address translator in call signaling messages intended for a called endpoint.

2. The method of claim 1 wherein the call signaling messages are formatted in the H.248 protocol.

3. The method of claim 1 wherein the call signaling messages are formatted in the Common Open Policy Service (COPS) protocol.

4. A method of providing endpoint anonymity in a packet data telephony network comprising:
receiving a temporary packet data network address from a network address translator; and
substituting the packet data network address of a called endpoint with the temporary packet data network address obtained from said network address translator in call signaling messages intended for a calling endpoint.

5. The method of claim 4 wherein the call signaling messages are formatted in the H.248 protocol.

6. The method of claim 4 wherein the call signaling messages are formatted in the Common Open Policy Service (COPS) protocol.

7. A method of providing calling endpoint anonymity in a packet data network telephony system comprising:
receiving a request for a temporary packet data network address from a packet data telephony call server; and
issuing a temporary packet data network address to said packet data telephony call server such that it can be substituted for the packet data network address of a calling endpoint in call signaling messages intended for a called endpoint.

8. The method of claim 7 wherein the call signaling messages are formatted in the H.248 protocol.

9. The method of claim 7 wherein the call signaling messages are formatted in the Common Open Policy Service (COPS) protocol.

10. A method of providing called endpoint anonymity in a packet data network telephony system comprising:
receiving a request for a temporary packet data network address from a packet data telephony call server; and
issuing a temporary packet data network address to said packet data telephony call server such that it can be substituted for the packet data network address of a called endpoint in call signaling messages intended for a calling endpoint.

11. The method of claim 10 wherein the call signaling messages are formatted in the H.248 protocol.

12. The method of claim 10 wherein the call signaling messages are formatted in the Common Open Policy Service (COPS) protocol.

13. A computer program product for providing endpoint anonymity in a packet data telephony network for calls established between a calling endpoint having a packet data network address and a called endpoint having a packet data network address, the computer program product having a medium with a computer program embodied thereon, the computer program product comprising:
computer program code for requesting a temporary packet data network address from a network address translator;
computer program code for receiving a temporary packet data network address from said network address translator; and
computer program code for substituting the packet data network address of the calling endpoint with the temporary packet data network address obtained from said network address translator in call signaling messages intended for said called endpoint.

14. The computer program product of claim 13 wherein the call signaling messages are formatted in the H.248 protocol.

15. The computer program product of claim 13 wherein the call signaling messages are formatted in the Common Open Policy Service (COPS) protocol.

16. A computer program product for providing endpoint anonymity in a packet data telephony network for calls established between a calling endpoint having a packet data network address and a called endpoint having a packet data network address, the computer program product having a medium with a computer program embodied thereon, the computer program product comprising:
computer program code for requesting a temporary packet data network address from a network address translator;
computer program code for receiving a temporary packet data network address from said network address translator; and
computer program code for substituting the packet data network address of the called endpoint with the temporary packet data network address obtained from said network address translator in call signaling messages intended for said calling endpoint.

17. The computer program product of claim 16 wherein the call signaling messages are formatted in the H.248 protocol.

18. The computer program product of claim 16 wherein the call signaling messages are formatted in the Common Open Policy Service (COPS) protocol.

19. A computer program product for providing endpoint anonymity for calls established between a calling endpoint having a packet data network address and a called endpoint having a packet data network address, the computer program product having a medium with a computer program embodied thereon, the computer program product comprising:
computer program code for receiving a request for a temporary packet data network address from a packet data telephony call server; and
computer program code for issuing a temporary packet data network address to said packet data telephony call server such that it can be substituted for the packet data network address of the calling endpoint in call signaling messages intended for said called endpoint.

20. The computer program product of claim 19 wherein the call signaling messages are formatted in the H.248 protocol.

21. The computer program product of claim 19 wherein the call signaling messages are formatted in the Common Open Policy Service (COPS) protocol.

22. A computer program product for providing endpoint anonymity for calls established between a calling endpoint having a packet data network address and a called endpoint having a packet data network address, the computer program product having a medium with a computer program embodied thereon, the computer program product comprising:
computer program code for receiving a request for a temporary packet data network address from a packet data telephony call server; and
computer program code for issuing a temporary packet data network address to said packet data telephony call server such that it can be substituted for the packet data network address of the called endpoint in call signaling messages intended for said calling endpoint.

23. The computer program product of claim 22 wherein the call signaling messages are formatted in the H.248 protocol.

24. The computer program product of claim 22 wherein the call signaling messages are formatted in the Common Open Policy Service (COPS) protocol,

25. A system for providing endpoint anonymity in a packet data telephony network for calls established between a calling endpoint having a packet data network address and a called endpoint having a packet data network address, said system comprising:
a call server for:
requesting a temporary packet data network address;
receiving a temporary packet data network address; and
substituting the packet data network address of the calling endpoint with the temporary packet data network address in call signaling messages intended for said called endpoint, and
a network address translator responsive to said call server for:
receiving, from said call server, a request for a temporary packet data network address; and
issuing a temporary packet data network address to said call server.
